# EUROPÄISCHE PATENTSCHRIFT

(11) **EP 1 434 982 B1**
(45) Veröffentlichungstag und Bekanntmachung des Hinweises auf die Patenterteilung: **03.09.2008**
(21) Anmeldenummer: 02798738.7
(22) Anmeldetag: 18.09.2002
(51) Int. Cl.: G01N 21/94

(54) **VERFAHREN UND VORRICHTUNG ZUR BESTIMMUNG DER QUANTITATIVEN VERSCHMUTZUNG VON OBERFLÄCHEN**
METHOD AND DEVICE FOR DETERMINING THE QUANTITATIVE CONTAMINATION OF SURFACES
PROCEDE ET DISPOSITIF POUR DETERMINER LA SALISSURE QUANTITATIVE DE SURFACES

(30) Priorität: 18.09.2001 DE 10145985
(43) Veröffentlichungstag der Anmeldung: 07.07.2004
(73) Patentinhaber: FKFS Forschungsinstitut für Kraftfahrwesen und Fahrzeugmotoren, D-70569 Stuttgart (DE)
(72) Erfinder: WIDDECKE, Nils, 71088 Holzgerlingen (DE); KUTHADA, Timo, 70563 Stuttgart (DE); KÜNSTNER, Rudi, 71679 Asperg (DE)
(74) Vertreter: Feldkamp, Rainer
(86) Internationale Anmeldenummer: PCT/EP2002/010491
(87) Internationale Veröffentlichungsnummer: WO 2003/025555

(56) Entgegenhaltungen:
- DE-A- 19 728 725
- DATABASE WPI Section EI, Week 199109 Derwent Publications Ltd., London, GB; Class S02, AN 1991-063691 XP002228511 & SE 463 946 B (VOLVO AB), 11. Februar 1991 (1991-02-11)

## Beschreibung

Die Erfindung bezieht sich auf ein Verfahren der im Oberbegriff des Anspruchs 1 genannten Art zur Bestimmung der quantitativen Verschmutzung von Oberflächen, insbesondere von Fahrzeugoberflächen, mit Hilfe optischer Einrichtungen, sowie auf eine Vorrichtung zur Durchführung des Verfahrens.

Bei der Bestimmung von Verschmutzungsgraden von Oberflächen stehen derzeit qualitative Verfahren im Vordergrund, die jedoch sehr subjektiv sind und keine Vergleichbarkeit der Ergebnisse ermöglichen.

Es sind jedoch auch Verfahren und Vorrichtungen bekannt, die die quantitative Bestimmung der Verschmutzung einer Oberfläche eines Gegenstandes mit Hilfe von Lichtstrahlung ermöglichen.

So ist aus der DE-A1 199 29 964 eine Vorrichtung und ein Verfahren zur Feststellung der Verschmutzung einer Scheibe eines Fahrzeugs bekannt, bei der bzw. bei dem zwei Linseneinheiten so fokussiert sind, daß sie einen eng begrenzten Tiefenschärfebereich, der beide Oberflächen der Scheibe einschließt, auf elektrooptische Empfangseinheiten abbilden, wobei der Tiefenschärfebereich gegebenenfalls mit einer Lichtquelle beleuchtet wird. Hierbei ist durch Auswertung der Ausgangssignale der Empfangseinheiten eine Unterscheidung zwischen Verschmutzungen auf der Scheibeninnnen- und -außenseite und eine Bestimmung des Veschmützungsgrades möglich.

Weiterhin ist aus der WO-A1 00/39566 ein Verfahren und eine Vorrichtung bekannt, bei dem bzw. bei der der Verschmutzungsgrad einer Oberfläche dadurch bestimmt wird, daß die Verschmutzung mit Hilfe eines Klebefilmes von der Oberfläche abgenommen und entweder die Lichtdurchlässigkeit des Klebefilmes im Durchlichtverfahren oder das Reflexionsvermögen der die Verschmutzung tragenden Seite des Klebefilmes im Auflichtverfahren gemessen wird.

Beide Verfahren eignen sich nur zur Bestimmung des Verschmutzungsgrades eng begrenzter Bereiche. Dies erschwert jedoch die Bestimmung der Verschmutzung großflächiger Oberflächen, beispielsweise von Kraftfahrzeugen.

Aus der SE-B-463946 (Derwent WPI; AN: 1991-063691(SE(B) 463946)) ist es bekannt, die Verschmutzung dadurch zu simulieren, daß eine Fahrzeugoberfläche, die zuvor mit einem feuchteempfindlichen Indikator präpariert wurde, in einem Windkanal in einer Luftströmung mit einem Benässungsmittel beaufschlagt wird. Die Farbveränderung des Indikators ist dann ein Maß für die Verschmutzung. Mit einer Kamera wird eine Bildfolge der Fahrzeugoberfläche aufgenommen, und die Bilder werden für eine nachfolgende Bildverarbeitung in Grauwerten digitalisiert. Es ist jedoch schwierig, große Fahrzeugoberflächen gleichmäßig mit einem Indikator zu präparieren.

Aus diesem Grund werden zur Beurteilung des Verschmutzungsverhaltens von Fahrzeugen im Windkanal diese mit einer von der Luftströmung mitgeführten Aufschlämmung, beispielsweise einer Kreideaufschlämmung, beaufschlagt, worauf die auf einer Flächeneinheit abgeschiedene Partikelmasse nach Trocknung gewogen wird. Alternativ kann hierbei ein Wassernebel mit darin enthaltenen Schmutzpartikeln durch flüssigen Stickstoff gefroren werden, worauf die gefrorene Schicht abgeklopft und deren Gewicht oder Dicke gemessen wird. Auch bei diesen Verfahren ist eine großflächige Bestimmung der Verschmutzung zeitaufwendig und kann zur Beschädigung und/oder Abnutzung des Windkanals bzw. des Fahrzeugs führen. Weiterhin ist die erzielbare Meßgenauigkeit gering.

Um die Verwendung einer Kreideaufschlämmung zu vermeiden, ist aus der DE 197 28 725 A1 weiterhin ein Verfahren der eingangs genannten Art bekannt, bei dem ein Fahrzeug lediglich mit Leitungswasser beaufschlagt wird und mit Hilfe einer Infrarotmeßeinrichtung die Infrarotstrahlungsverteilung an der Oberfläche des Fahrzeugs gemessen wird. Hierbei muß jedoch eine Kompensation von Meßfehlern erfolgen, die durch andere als durch das Leitungswasser hervorgerufene Temperaturänderungen der Oberflächen entstehen.

Der Erfindung liegt die Aufgabe zugrunde, ein Verfahren bzw. Vorrichtungen der eingangs genannten Art zu schaffen, das bzw. die eine weniger aufwendige Bestimmung der quantitativen Verschmutzung von großen Oberflächenbereichen, insbesondere von Fahrzeugen ermöglicht.

Diese Aufgabe wird durch ein Verfahren mit den Merkmalen des Anspruchs 1 und Vorrichtungen mit den Merkmalen des Anspruchs 8 bzw. 9 gelöst.

Vorteilhafte Ausgestaltungen und Weiterbildungen der Erfindung ergeben sich aus den jeweiligen Unteransprüchen.

Durch das erfindungsgemäße Verfahren bzw. die Vorrichtungen wird eine einfache und genaue Bestimmung der quantitativen Verschmutzung von großen Oberflächenbereichen ermöglicht.

Bei dem erfindungsgemäßen Verfahren zur Bestimmung der quantitativen Verschmutzung von Oberflächen, insbesondere von Fahrzeugoberflächen mit Hilfe optischer Einrichtungen, wird eine photographische Referenzaufnahme der zu untersuchenden Oberfläche ohne Verschmutzung aufgenommen und digitalisiert und von einer nach einer aufgetretenen Verschmutzung aufgenommenen digitalisierten Aufnahme digital subtrahiert. Die Verschmutzung der Oberfläche wird in einer Luftströmung durch ein Benässungsmittel simuliert, dem ein Fluoreszenzmittel beigemischt wird.

Zur Beleuchtung der Oberfläche sind durch eine Schwarzlichtquelle gebildete Beleuchtungseinrichtungen vorgesehen.

Bei einer Ausführungsform des Verfahrens werden die auf die Referenzaufnahme folgenden Aufnahmen als eine Videosequenz aufgenommen.

Bei einer weiteren Ausführungsform werden die auf die Referenzaufnahme folgenden Aufnahmen als Einzelbilder aufgenommen.

Die Daten der digitalisierten Aufnahmen können in getrennte Farbkanäle eingelesen und getrennt weiterverarbeitet werden.

Das durch Subtraktion der Referenzaufnahme von einer später erstellten Aufnahme erzeugte Auswertungsbild kann gemäß einer Ausführungsform einer photographischen Aufnahme der untersuchten Oberfläche überlagert werden.

Bei einer vorteilhaften Ausgestaltung der Erfindung wird jede Aufnahme der Oberfläche in Rasterfelder mit einer vorgegebenen Pixelanzahl unterteilt.

Bei einer bevorzugten Ausführungsform ist bei einer Vorrichtung zur Durchführung des Verfahrens ein Windkanal vorgesehen, in dessen Meßstrecke der Gegenstand, dessen Oberfläche zu untersuchen ist, angeordnet ist, wobei der Luftströmung des Windkanals in einer Mischeinrichtung das Benässungsmittel zugemischt wird, und wobei zumindest eine Kamera zur Aufnahme zumindest eines Bereichs der zu untersuchenden Oberfläche auf diese Oberfläche gerichtet wird.

Darüberhinaus sind durch eine Schwanlichtquelle gebildete Beleuchtungseinrichtungen zur Beleuchtung der Oberfläche vorgesehen.

Die Erfindung wird nachfolgend anhand der Zeichnungen noch näher erläutert.

In den Zeichnungen zeigen:
- Figur 1: eine schematische Darstellung einer Vorrichtung zur Durchführung des Verfahrens,
- Figur2: ein Beispiel eines mit der Vorrichtung nach Figur 1 erzeugten Rasterbildes eines Fahrzeughecks.
- Figur 3: eine graphische Darstellung des zeitlichen Verlaufs der Verschmutzung für ein Rasterfetd.

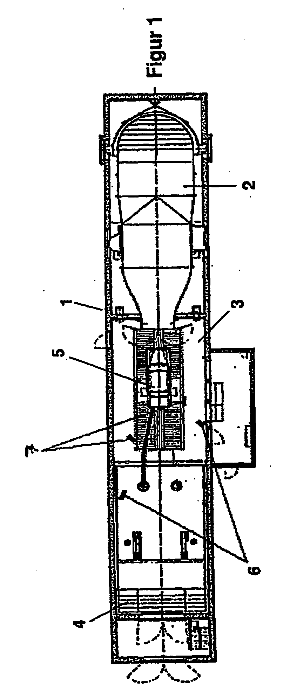

In Figur 1 ist eine Ausführungsform einer Vorrichtung zur Durchführung des erfindungsgemäßen Verfahrens gezeigt, die einen Prüfstand in Form eines Windkanals 1 verwendet, der ein Gebläse 2, eine Meßstrecke 3 und einen Luftaustritt 4 aufweist.

Auf der Meßstrecke 3 ist ein Gegenstand 5 angeordnet, dessen Verschmutzung gemessen werden soll, wobei in Figur 1 lediglich als Beispiel ein Kraftfahrzeug dargestellt ist. Selbstverständlich ist das erfindungsgemäße Verfahren bzw. die Vorrichtung nicht auf die quantitative Bestimmung der Verschmutzung von Fahrzeugen beschränkt, und die Verschmutzung kann auch durch andere Maßnahmen als einen Windkanal hervorgerufen werden.

Die Oberflächen des Fahrzeugs 5 werden mit einer Benässung beaufschlagt, die der Luftströmung in dem Windkanal 1 beigemischt wird, wobei dieser Benässung ein Fluoreszenzmittel beigemischt wird.

Zu untersuchende Bereiche der Oberflächen des Fahrzeugs 5 werden großflächig mit einer oder mehreren Kameras 6 aufgenommen, deren Ausgangssignal vorzugsweise digital bearbeitet wird.

Wie dies in Figur 1 gezeigt ist, können die Kameras 6 mit unterschiedlichen Blickrichtungen auf unterschiedliche Bereiche des Fahrzeugs 5 gerichtet werden, das mit Schwarzlichtlampen 7 beleuchtet wird.

Hierbei wird der Grauwert der aufgenommenen Einzelbilder analysiert. Der Grauwert ist ein direktes Maß des Verschmutzungsgrades des jeweiligen Oberflächenbereiches. Hierbei entspricht der Grauwert 0 einer sauberen Oberfläche und somit der Originalfarbe dieser Oberfläche, und der Grauwert 255 einer vorab definierten Referenzverschmutzung, wobei dies z. B. eine maximal verschmutzte Oberfläche sein kann. Je größer der Grauwert, desto größer ist die Verschmutzung. Die Auflösung des Grauwerts von 0 bis 255 entspricht einer Digitalisierung mit 8 bit und ist Standard in der Falschfarbentechnik.

Im Folgenden wird zur Vereinfachung lediglich der Begriff "Grauwert" verwendet, wobei dieser Begriff jedoch auch die Werte eines Farbkanals oder einer Kombination mehrerer Farbkanäle umfassen soll.

Als Fluoreszenzmittel kann beispielsweise das unter dem Handelsnamen "UVITEX 2BT" erhältliche Mittel verwendet werden, das mit einem bestimmten Volumenanteil dem Wasser beigemischt wird, das zur Benässung der Oberflächen des Fahrzeugs in dem Luftstrom verwendet wird. Dieses Wasser-Fluoreszenzmittel-Gemisch wird mit UV-Licht im kurzwelligen Wellenbereich angeregt, die Emission des Fluoreszenzsignals erfolgt zu längeren Wellenlängen hin frequenzverschoben im Wellenbereich von 430 bis 450 nm.

Ein derartiges Fluoreszenz mittel ist weniger problematisch als eine Kreide- oder andere Materialaufschlämmung, die ebenfalls zur Visualisierung der Verschmutzung eingesetzt werden könnte, da diese erosiv auf die Oberflächen und den Windkanal 1 wirkt und eine intensive Reinigung des gesamten Prüfstandes einschließlich der Luftführung nach jeder Untersuchung erfordert.

Bei der Positionierung der Kamera oder der Kameras 6 ist darauf zu achten, daß sie während der gesamten Versuchszeit keinerlei Relativbewegungen zum Fahrzeug ausgesetzt sind, damit sich der Bildausschnitt über die Versuchszeit hinweg nicht verändert. Damit können die einzelnen Bilder, die als Bildsequenz über einen gewissen Zeitraum zur Erfassung des zeitlichen Verlaufs der Verschmutzung und gegebenenfalls unter unterschiedlichen Strömungsgeschwindigkeiten aufgenommen wurden, untereinander elektronisch verglichen und verarbeitet werden.

Die Aufnahmen können entweder in Form einer Serie von Einzelbildem oder als eine Videosequenz erfolgen. Im Folgenden wird die Vorgehensweise für eine Videosequenz beschrieben. Die Vorgehensweise bei Einzelbildem erfolgt analog hierzu.

Zu Beginn jeder Messung wird eine Referenzaufnahme der zu untersuchenden Oberfläche erstellt. Diese Referenzaufnahme erfolgt unter den Standardumgebungsbedingungen des geplanten Versuchs (z. B. Wind, Radantrieb, Ausrichtung zur Luftströmung), jedoch bei sauberem Fahrzeug und ausgeschalteter Verschmutzungssimulation.

Anschließend können die Aufnahmen der zu untersuchenden Oberflächen bei eingeschalteter Verschmutzungssimulation erfolgen.

Das anfangs gewonnene Referenzbild kann in einem nachfolgenden Schritt von den im zeitlichen Verlauf aufgenommenen einzelnen Verschmutzungsbildem digital subtrahiert werden. Das so gewonnene Meßbild ist dann unabhängig von der Hintergrundfarbe oder von eventuell vorhandenen Reflexionen.

Bei der digitalen Verarbeitung der Aufnahmen liest ein Auswerteprogramm die Daten vorzugsweise in drei getrennte Farbkanäle ein. Diese Farbkanäle können gemäß dem RGB-Farbmodell rot, grün und blau sein. Das Auswerteprogramm kann sowohl Grautöne als auch Farbsequenzen verarbeiten.

Der Reflexionsbereich des vorstehend angegebenen Fluoreszenzmittels liegt im Wesentlichen im blauen und grünen Spektralbereich.

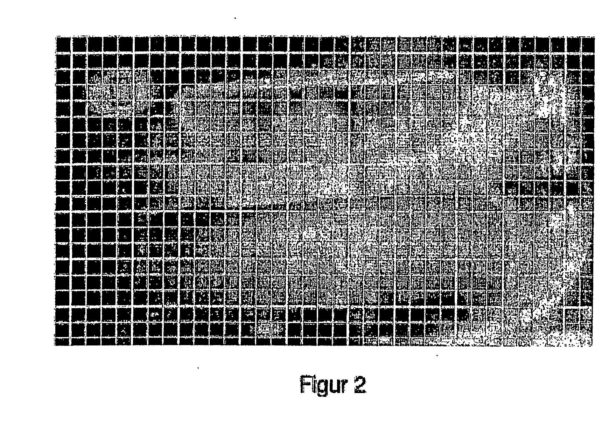

Zur digitalen Bildbearbeitung kann ein Raster mit einer Feldgröße von 10x10 Pixeln über die zu untersuchende Oberfläche gelegt werden, wie dies in Figur 2 gezeigt ist.

Für jedes Rasterfeld ermittelt das Auswerteprogramm dann den Grauwert. Damit kann über eine größere Fläche, wie z. B. von 20 x 35 Feldern für eine Heckaufnahme eines Fahrzeugs, die Grauwertverteilung ermittelt werden.

Sowohl die Feldgröße als auch die Anzahl der Rasterfelder kann den jeweiligen Erfordernissen angepaßt werden; die obengenannten Werte stellen lediglich Beispiele dar.

Dieses Verfahren wird auf jedes zu untersuchende Bild angewendet, und der Grauwert kann als Datei ausgegeben und zur weiteren Verarbeitung abgespeichert werden.

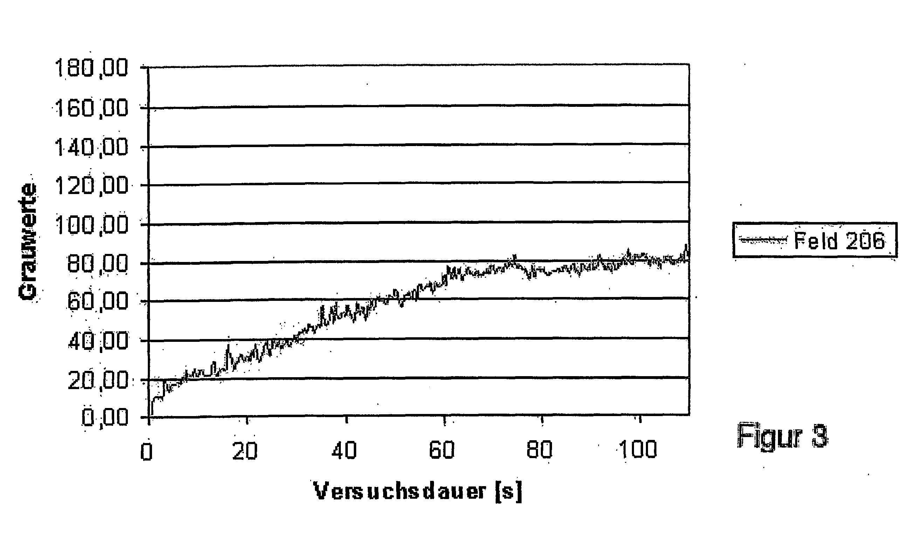

Auf diese Weise kann ein zeitlicher Verlauf der Grauwertverteilung und damit der Verschmutzung über einzelne zu untersuchende Felder errechnet und dargestellt werden, wie dies in Figur 3 gezeigt ist.

Außerdem kann die Verschmutzung in Form einer Kontur-Darstellung für einen bestimmten Zeitpunkt einzeln oder einer Fahrzeugphotographie überlagert dargestellt werden.

Zusätzlich wird die Möglichkeit geboten, durch eine Differenzbildung den quantitativen Unterschied zwischen zwei Varianten darzustellen.

Im Vorstehenden wurde die Durchführung des Verfahrens anhand einer Vorrichtung in Form eines Windkanals erläutert. Es ist jedoch bei Anwendung des Verfahrens auf ein sich bewegendes Fahrzeug auch denkbar, daß die Vorrichtung lediglich an dem Fahrzeug befestigbare Halterungen mit einer Sprühvorrichtung für ein Benässungsmittel, durch eine Schnanlichtquelle gebildete Beleuchtungseinrichtungen, zumindest eine Kamera (6) zur Aufnahme zumindest eines Bereichs der zu untersuchenden Oberfläche des Fahrzeugs und eine Auswerteeinrichtung aufweist, die die Ausgangssignale der zumindest einen Kamera (6) empfängt und verarbeitet.

## Patentansprüche

1. Verfahren zur Bestimmung der quantitativen Verschmutzung von Oberflächen, insbesondere von Fahrzeugoberflächen, mit Hilfe optischer Einrichtungen, bei dem eine photographische Referenzaufnahme der zu untersuchenden Oberfläche ohne Verschmutzung aufgenommen und digitalisiert und von einer nach einer aufgetretenen Verschmutzung aufgenommenen digitalisierten Aufnahme digital subtrahiert wird, **dadurch gekennzeichnet, dass** die Oberflächen in einer Luftströmung mit einem Benässungsmittel beaufschlagt werden, dem ein Fluoreszenzmittel beigemischt wird, dass die Referenzaufnahme vor Beginn der Zufügung des Benässungsmittels erfolgt, dass die nachfolgenden Aufnahmen während der Zufügung des Benässungsmittels erfolgen, und dass die Oberfläche während der Aufnahmen mit Schwarzlichtquellen beleuchtet wird.

2. Verfahren nach Anspruch 1, **dadurch gekennzeichnet, dass** die auf die Referenzaufnahme folgenden Aufnahmen als eine Videosequenz aufgenommen werden.

3. Verfahren nach Anspruch 1 oder 2, **dadurch gekennzeichnet, dass** die auf die Referenzaufnahme folgenden Aufnahmen als Einzelbilder aufgenommen werden.

4. Verfahren nach einem der Ansprüche 1-3, **dadurch gekennzeichnet, dass** die Daten der digitalisierten Aufnahmen in getrennte Farbkanäle eingelesen und weiterverarbeitet werden.

5. Verfahren nach einem der Ansprüche 1-4, **dadurch gekennzeichnet, dass** das durch Subtraktion der Referenzaufnahme von einer später erstellten Aufnahme erzeugte Auswertungsbild einer photographischen Aufnahme der untersuchten Oberfläche überlagert wird.

6. Verfahren nach einem der Ansprüche 1-5, **dadurch gekennzeichnet, dass** jede Aufnahme der Oberfläche in Rasterfelder mit einer vorgegebenen Pixelanzahl unterteilt wird.

7. Verfahren nach einem der vorhergehenden Ansprüche, **dadurch gekennzeichnet, dass** die Oberfläche in der Messstrecke eines Windkanals angeordnet wird, dessen Luftströmung dem Benässungsmittel zugemischt wird.

8. Vorrichtung zur Bestimmung der quantitativen Verschmutzung von Oberflächen, insbesondere von Fahrzeugoberflächen, mit
- einem Windkanal (1), in dessen Messstrecke (3) der Gegenstand (5) mit der zu untersuchenden Oberfläche angeordnet werden kann,
- einem Gebläse (2) zur Erzeugung einer Luftströmung im Windkanal (1),
- einer Mischeinrichtung, mittels dener der Luftströmung ein Benässungsmittel , das mit einem Fluoreszenzmittel versetzt ist, zugemischt werden kann,
- mindestens einer Kamera (6) zur Aufnahme zumindest eines Bereichs der untersuchenden Oberfläche vor und während der Zufügung des Benässungsmittels,
- einer Auswerteeinrichtung, die die Ausgangssignale der mindestens einen Kamera (6) empfängt und verarbeitet, **dadurch gekennzeichnet, daβ** die Vorrichtung
durch eine Schwarzlichtquelle (7) gebildete Beleuchtungseinrichtungen zur Beleuchtung der Oberflächen aufweist.

9. Vorrichtung zur Bestimmung der quantitativen Verschmutzung der Oberfläche eines sich bewegenden Fahrzeugs, mit:
- am Fahrzeug befestigbaren Halterungen mit einer Sprühvorrichtung zur Beaufschlagung der Oberfläche mit einem Benässungsmittel, das mit einem Fluoreszenzmittel versetzt wurde,
- mindestens einer Kamera zur Aufnahme zumindest eines Bereichs der zu untersuchenden Oberfläche des Fahrzeugs vor und während der Zufügung des Benässungsmittels mittels der Sprühvorrichtung,
- einer Auswerteeinrichtung, die die Ausgangssignale der zumindest einen Kamera empfängt, und
- durch eine Schwarzlichtquelle gebildeten Beleuchtungseinrichtungen zur Beleuchtung der Oberfläche.

## Claims

1. Method to determine the quantitative soiling of surfaces, in particular, the surfaces of vehicles, by means of optical devices wherein a photographic reference recording is made of the unsoiled surface being studied, and is digitised and is digitally subtracted from a digitised recording taken after soiling has occurred, **characterised in that** the surfaces are coated in an air stream with a wetting agent, into which a fluorescent agent has been mixed, that the reference recording takes place before the wetting agent is applied, that the subsequent recordings take place as the wetting agent is being applied, and that the surface is illuminated from black light sources during the recordings.

2. Method in accordance with claim 1, **characterised in that** the recordings taken following the reference recording are taken as a video sequence.

3. Method in accordance with claim 1 or 2, **characterised in that** the recordings taken following the reference recording are taken as individual images.

4. Method in accordance with any of claims 1-3, **characterised in that** the data from the digitised recordings are read into separate colour channels and processed further.

5. Method in accordance with any of claims 1-4, **characterised in that** the evaluation image produced by subtracting the reference recording from a recording produced later is laid over a photographic recording of the surface being studied.

6. Method in accordance with any of claims 1-5, **characterised in that** each recording of the surface is subdivided into grids with a specified number of pixels.

7. Method in accordance with one of the preceding claims, **characterised in that** the surface is arranged in the measurement section of a wind tunnel into whose air stream the wetting agent is mixed.

8. Device to determine the quantitative soiling of surfaces, in particular, the surfaces of vehicles, with
- a wind tunnel (1), in whose measurement section (3) the object (5) with the surface being studied can be arranged,
- a fan (2) to produce an air stream in the wind tunnel (1),
- a mixing device by means of which a wetting agent, which is mixed with a fluorescent agent, can be mixed into the air stream,
- at least one camera (6) to make a recording of at least one area of the surface being studied before and while the wetting agent is being applied,
- an evaluation device, which receives and processes the output signals from at least one camera (6), **characterised in that** that device has illumination means formed by a black light source (7) to illuminate the surface.

9. Device to determine the quantitative soiling of the surface of a moving vehicle, with:
- fixtures that can be attached to the vehicle with a spray device to apply a wetting agent, which is mixed with a fluorescent agent, to the surface,
- at least one camera to make a recording of at least one area of the surface being studied of the vehicle before and while the wetting agent is being applied with the spray device,
- an evaluation device, which receives the output signals from at least one camera, and
- illumination means formed by a black light source to illuminate the surface.

## Revendications

1. Procédé servant à déterminer la salissure quantitative de surfaces, en particulier de surfaces de véhicules, à l'aide de dispositifs optiques, dans le cadre duquel un cliché photographique de référence de la surface à examiner sans salissure est pris et numérisé et est soustrait numériquement d'un cliché numérisé pris après l'apparition d'une salissure, **caractérisé en ce que** les surfaces sont alimentées dans un flux d'air par un agent mouillant, auquel est mélangé un agent fluorescent, **en ce que** le cliché de référence est pris avant le début de l'adjonction de l'agent mouillant, **en ce que** les clichés suivants sont pris pendant l'adjonction de l'agent mouillant et **en ce que** la surface est éclairée pendant les prises de vue par des sources de lumière noire.

2. Procédé selon la revendication 1, **caractérisé en ce que** les clichés suivant le cliché de référence sont pris en tant que séquence vidéo.

3. Procédé selon les revendications 1 ou 2, **caractérisé en ce que** les clichés suivant le cliché de référence sont pris en tant qu'images individuelles.

4. Procédé selon l'une quelconque des revendications 1 à 3, **caractérisé en ce que** les données des clichés numérisés sont lues et traitées dans des canaux de couleurs séparés.

5. Procédé selon l'une quelconque des revendications 1 à 4, **caractérisé en ce que** l'image d'analyse produite par la soustraction du cliché de référence d'un cliché établi ultérieurement est superposée à un cliché photographique de la surface examinée.

6. Procédé selon l'une quelconque des revendications 1 à 5, **caractérisé en ce que** chaque cliché de la surface est divisé en champs balayés par un nombre de pixels prédéterminé.

7. Procédé selon l'une quelconque des revendications précédentes, **caractérisé en ce que** la surface est disposée dans la section mesurée d'un tunnel aérodynamique, dont le courant d'air est mélangé à l'agent mouillant

8. Dispositif servant à déterminer la salissure quantitative de surfaces, en particulier de surfaces de véhicules, avec :
- un tunnel aérodynamique (1), dans la section de mesure (3) duquel l'objet (5) peut être disposé avec la surface à examiner,
- un ventilateur (2) servant à produire un courant ou un flux d'air dans le tunnel aérodynamique (1),
- un dispositif de mélange, au moyen duquel un agent mouillant peut être mélangé au courant d'air, qui est mélangé à un agent fluorescent,
- au moins une caméra (6) pour la prise de vue d'au moins une zone de la surface à examiner avant et pendant l'adjonction de l'agent mouillant,
- un dispositif d'analyse qui reçoit et traite les signaux de sortie d'au moins une caméra (6), **caractérisé en ce que** le dispositif présente des dispositifs d'éclairage formés par une source de lumière noire (7) pour l'éclairage de la surface.

9. Dispositif servant à déterminer la salissure quantitative de la surface d'un véhicule en mouvement avec :
- des points d'attache pouvant être fixés au véhicule avec un dispositif de pulvérisation pour l'alimentation de la surface avec un agent mouillant mélangé à un agent fluorescent,
- au moins une caméra pour la prise de vue d'au moins une zone de la surface à examiner du véhicule avant et pendant l'adjonction de l'agent mouillant au moyen du dispositif de pulvérisation,
- un dispositif d'analyse, qui reçoit les signaux de sortie d'au moins une caméra, et
- des dispositifs d'éclairage formés par une source de lumière noire pour l'éclairage de la surface.
